# EUROPÄISCHE PATENTSCHRIFT

(11) **EP 0 436 817 B1**
(45) Veröffentlichungstag und Bekanntmachung des Hinweises auf die Patenterteilung: **26.01.1994**
(21) Anmeldenummer: 90122489.9
(22) Anmeldetag: 26.11.1990
(51) Int. Cl.: A01C 23/02

(54) **Injektionsvorrichtung zur kontinuierlichen Einbringung von Flüssigdünger od. dgl. in den Boden**
Device for continuously bringing liquids below the surface into the ground
Dispositif injecteur pour introduire continuellement des liquides dans le sol

(30) Priorität: 04.01.1990 DE 9000053 U
(43) Veröffentlichungstag der Anmeldung: 17.07.1991
(73) Patentinhaber: De Dissel Beheer B.V., NL-7122 AA Aalten (NL)
(72) Erfinder: Hoopman, J.W., NL-7122 JH Aalten (NL)
(74) Vertreter: Schulze Horn, Stefan, Dipl.-Ing. M.Sc.

(56) Entgegenhaltungen:
- EP-A- 0 246 346
- EP-A- 0 395 173
- DE-C- 290 919
- GB-A- 1 217 473

## Beschreibung

Die Erfindung betrifft eine Injektionsvorrichtung zur kontinuierlichen Einbringung von Flüssigdünger, wie Flüssigmist oder Gülle, in den Boden.

Die EP 0 246 346 A1 beschreibt eine Injektionsvorrichtung zur kontinuierlichen Einbringung von Flüssigdünger in den Boden, mit einem oder mehreren parallel zueinander angeordneten, in den Boden einführbaren und durch diesen parallel zur Bodenoberfläche hindurchbewegbaren, Flüssigdünger führenden und abgebenden Injektionskörpern sowie mit vor den Injektionskörpern drehbar angeordneten Vorschneidrädern und mit die Zuführung und die Dosierung des Flüssigdüngers mittels Dosierschleusen bewirkenden, auf dem Boden abrollenden Antriebsrädern, wobei die Injektionsvorrichtung an einen Traktor oder ein Tankfahrzeug anbaubar ist. Bei dieser bekannten Injektionsvorrichtung erfolgt das Verschließen der Bodenschlitze durch die Antriebsräder für die Dosierschleusen. Dazu muß jedem Injektionskörper ein eigenes Antriebsrad zugeordnet sein. Dies ist in zweierlei Hinsicht nachteilig: Zum einen bedeutet eine solche Ausführung - gerade für breiter bauende Injektionsvorrichtungen mit einer größeren Anzahl von Injektionskörpern - einen hohen Aufwand hinsichtlich der Anzahl der einzusetzenden Antriebsräder und zum anderen muß, da das Gesamtgewicht der Injektionsvorrichtung auf eine Mehrzahl von Antriebsrädern verteilt ist, für jedes Antriebsrad eine zusätzliche Andruckkraft, z.B. mittels Federn oder Ballastgewichten, erzeugt werden.

Die ältere, nachveröffentlichte EP 0 395 173 A1 zeigt einen Injektionskörper mit einem Nachlaufradpaar. Der Injektionskörper besitzt hier ein Injektionsrohr mit einer im wesentlichen horizontalen Schneidplatte am unteren Ende, die zur Erzeugung einer Furche im Boden dient. Zwei Räder sind hinter dem Injektionsrohr angeordnet und drehbar auf zwei separaten Achsen angebracht. Die Anordnung der Räder ist dabei so, daß sie sowohl in Horizontalrichtung als auch in Vertikalrichtung gesehen eine V-Stellung zueinander einnehmen. Bei Bewegung der Räder soll die Furche im Boden dann nur an ihrem oberen Ende geschlossen werden. Antriebs-, Verteil- oder Dosiereinrichtungen sind hier nicht beschrieben.

Der vorliegenden Erfindung liegt die Aufgabe zugrunde, eine Injektionsvorrichtung zur kontinuierlichen Einbringung von Flüssigdünger in den Boden anzugeben, die bei vermindertem technischen Aufwand wirtschaftlich und betriebssicher einsetzbar ist.

Die Lösung der Aufgabe gelingt erfindungsgemäß durch eine Injektionsvorrichtung gemäß dem Patentanspruch 1.

Die Anbaubarkeit der Injektionsvorrichtung gemäß Erfindung an einem Traktor oder an ein Tankfahrzeug stellt einen wirtschaftlichen Betrieb bei geringen Anschaffungs- und Unterhaltskosten sicher. Weiter wird durch die erfindungsgemäße Injektionsvorrichtung erreicht, daß die Antriebsräder nicht mehr zum Verschließen der Bodenschlitze eingesetzt werden müssen, da die Bodenschlitze mittels der Nachlaufräder verschlossen werden. Das hat zur Folge, daß - unabhängig von der Anzahl der Injektionskörper - in der Regel eine erfindungsgemäße Injektionsvorrichtung nur noch zwei Antriebsräder aufweisen muß. Es ist ersichtlich, daß damit eine Verringerung des konstruktiven und des materiellen Aufwandes erreicht wird. Weiterhin ist von Vorteil, daß die Nachlaufräder aufgrund ihres gegenüber den Antriebsrädern geringeren Durchmessers wesentlich näher an den Injektionskörpern angeordnet sein können. Dies hat zum einen ein schnelleres Verschließen der Bodenschlitze zur Folge und zum anderen den Vorteil, daß bei Kurvenfahrten keine wesentliche Abweichung der Nachlaufräder vom Bodenschlitz auftreten kann. Durch die erfindungsgemäße Ausgestaltung jeweils eines Nachlaufradpaares wird erreicht, daß die von den Injektionskörpern geöffneten Bodenschlitze wieder verschlossen werden, ohne daß der in dem Bodenschlitz befindliche Flüssigdünger nach oben oder vorne aus dem Schlitz herausgedrückt wird.

Es gibt nun verschiedene Möglichkeiten, die Lehre der Erfindung auszugestalten und weiterzubilden, wozu einerseits auf die Unteransprüche und andererseits auf die nachfolgende Erläuterung bevorzugter Ausführungsbeispiele der erfindungsgemäßen Injektionsvorrichtung anhand der Zeichnung verwiesen wird. In der Zeichnung zeigt:
- Fig. 1: eine erfindungsgemäße Injektionsvorichtung in perspektivischer Darstellung von schräg hinten;
- Fig. 2: eine Hinteransicht derselben Injektionsvorrichtung in Richtung der Pfeile II nach den Figuren 1 und 3, unter Weglassung (der Deutlichkeit halber) der beiden inneren Nachlaufradpaare;
- Fig. 3: eine Seitenansicht derselben Injektionsvorrichtung in Richtung der Pfeile III nach den Figuren 1 und 2;
- Fig. 4: eine erfindungsgemäßes Nachlaufradpaar in einer Draufsicht, teilweise geschnitten;
- Fig. 5: ein Vorschneidrad der erfindungsgemäßen Injektionsvorrichtung im Radial-Schnitt;
- Fig. 6: einen Injektionskörper der erfindungsgemäßen Injektionsvorrichtung in Vorderansicht und
- Fig. 7: denselben Injektionskörper in einer Ansicht von unten.

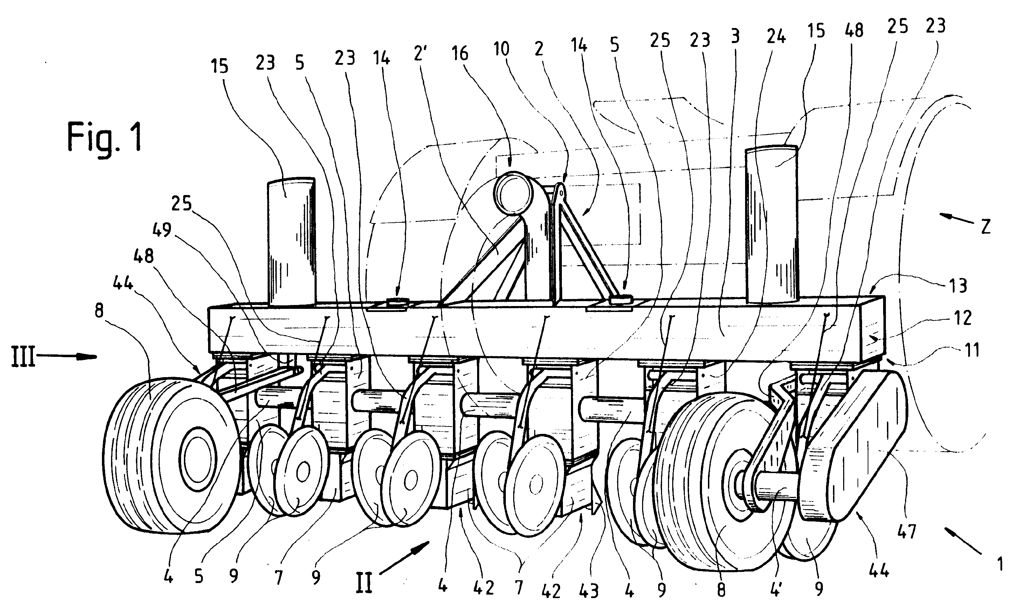

Die Injektionsvorrichtung 1 nach Fig. 1 besteht im wesentlichen aus einem Rahmen 2, einer quer zur Bewegungsrichtung verlaufenden Verteilerkammer 3 und mehreren, im dargestellten Ausführungsbeispiel sechs, unterhalb der Verteilerkammer 3 angeordneten und über Wellen 4 miteinander verbundenen Dosierschleusen 5 mit jeweils einem davon ausgehenden, in den Erdboden 6 hineinragenden Injektionskörper 7. Es können auch mehr oder weniger Injektionskörper 7 vorhanden sein. Angetrieben und getragen wird die gesamte Injektionsvorrichtung 1 von zwei Antriebsrädern 8, welche gleichzeitig über weiter unten noch zu erläuternde Einrichtungen die Dosierschleusen 5 antreiben. Weiterhin sind hinter den einzelnen Injektionskörpern 7 angeordnete Nachlaufräder 9 zum Verschließen der Bodenschlitze vorgesehen.

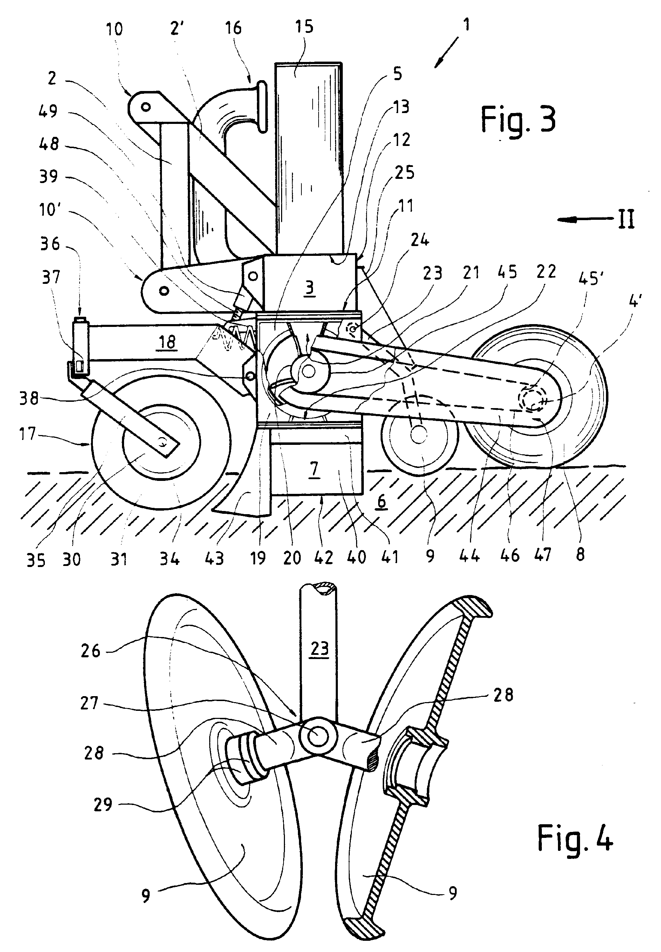

Der Rahmen 2 hat die Form eines auf seiner Basis stehenden Dreiecks und weist an seinen Enden Anschlaglaschen 10 bzw. 10' auf, wie besonders aus Fig. 3 hervorgeht. Diese Anschlaglaschen 10 bzw. 10' dienen zur Verbindung der Injektionsvorrichtung 1 mit einer Dreipunkt-Aufhängung eines Traktors oder eines anderen in Fig. 1 nur strichpunktiert angedeuteten Zugfahrzeugs Z.

In seinem unteren Teil ist der Rahmen 2 mit der als tragendes Teil ausgebildeten, quer zur Bewegungsrichtung der Injektionsvorrichtung 1 verlaufenden Verteilerkammer 3 verbunden. Die Verteilerkammer 3 besteht aus einem Bodenteil 11, Seitenwänden 12 und einem Deckelteil 13, so daß sich ein quaderförmiger Hohlkörper ergibt. Im Deckelteil 13 sind mehrere, im gezeigten Ausführungsbeispiel zwei Wartungs- und Kontrollöffnungen 14 ausgeschnitten, die im Normalzustand mit nicht näher bezeichneten Deckeln, welche für die genannten Zwecke geöffnet werden können, dicht verschlossen sind. Es versteht sich, daß die Anzahl und die Größe der Wartungs- und Kontrollöffnungen 14 von den Abmessungen der Verteilerkammer 3 abhängig sind. Insbesondere können auch die Seitenwände 12 als Inspektions- und Reinigungsdeckel ausgestaltet sein. Weiterhin sind auf dem Deckelteil 13 der Verteilerkammer 3 zwei Entlüftungseinrichtungen 15 angebracht, deren Aufbau und Funktion für sich bekannt ist und worauf daher nicht näher eingegangen zu werden braucht. Schließlich weist die Verteilerkammer 3 einen Anschlußstutzen 16 auf, an welchen ein Schlauch von einem Flüssigdüngertank kommend anschließbar ist und durch welchen der Flüssigdünger von dem Tank in die Verteilerkammer 3 gelangt.

Nicht dargestellt ist, daß durch die Injektionsvorrichtung eine in Bewegungsrichtung der Injektionsvorrichtung verlaufende Zapfwelle geführt sein kann, welche eine Verlängerung der Zapfwelle eines Traktors od. dgl. darstellt und an die beispielsweise ein Zapfwellenanschluß eines Pumpenantriebes von einem Tankanhänger od. dgl. angeschlossen werden kann.

Fig. 3 zeigt die Injektionsvorrichtung 1 aus Fig. 1 in Seitenansicht, wobei die Bewegungsrichtung der Injektionsvorrichtung 1 in der Darstellung von rechts nach links verläuft. Den oberen Teil der Injektionsvorrichtung 1 bildet wieder der Rahmen 2, der zur Versteifung mittels Streben 2' mit dem Deckelteil 13 der Verteilerkammer 3 fest verbunden ist. Die Verteilerkammer 3 ist in dieser Seitenansicht in Stirnansicht sichtbar, wobei der rechteckige Querschnitt der Verteilerkammer 3 deutlich wird. An der Oberseite der Verteilerkammer 3 ist eine der Entlüftungseinrichtungen 15 erkennbar. Aus Fig. 3 geht ebenso die gekrümmte Form des Anschlußstutzens 16 besonders deutlich hervor. Der Anschlußstutzen 16 ist in diesem Ausführungsbeispiel nicht unmittelbar an der Verteilerkammer 3 angeordnet, sonderen als Rohrstück von dieser nach oben geführt. Diese Anordnung bietet den Vorteil, daß ein Schlauch, der die Verbindung zu einem Tankwagen herstellt, in nur geringem Umfang mechanisch beansprucht wird, so daß auch für die Verbindung zwischen Tankwagen und Vorrichung 1 eine hohe Betriebssicherheit sichergestellt wird. Dies geht andeutungsweise auch aus Fig. 1 hervor, wo der Schlauch strichpunktiert dargestellt ist.

Fig. 3 zeigt ferner ein in Bewegungsrichtung der erfindungsgemäßen Injektionsvorrichtung 1 vorne vorgesehenes Vorschneidrad 17. Jedem einzelnen Injektionskörper 7 ist ein solches Vorschneidrad 17 in Form einer flachen, scharfkantigen Scheibe zugeordnet. Dabei ist das Vorschneidrad 17 um seinen Mittelpunkt drehbar gelagert und mittels eines Schwenkarms 18 jeweils an einer Dosierscheuse gelenkig gelagert. Wie weiter unten noch erläutert werden wird, wird der Schwenkarm 18 und damit das Vorschneidrad 17 mit einer vorgegebenen Kraft in den Erdboden 6 eingedrückt, so daß in diesen kontinuierlich ein vertikaler Schnitt eingebracht wird. Dies ist besonders wichtig, wenn die Injektionsvorrichtung 1 auf Wiesen eingesetzt wird, die eine stark verfilzte Grasnarbe aufweisen. Diese würde nämlich ohne das Vorschneiden des Vorschneidrades 17 von dem Injektionskörper 7 aufgerissen werden, was Vegitationsschäden zur Folge hätte.

Nach unten schließt sich an die Verteilerkammer 13 das Gehäuse 19 der Dosierschleuse 5 an. Im Inneren des Gehäuses 19 ist ein Zellenrad 20 zu erkennen, das, wie aus der aufgebrochenen Darstellung des in Fig. 3 gezeigten Ausführungsbeispiels hervorgeht, vier nicht näher bezeichnete Flügel aufweist. Die Flügel sind in Rotationsrichtung des Zellenrades 20 gesehen an ihren Enden nach vorn gebogen und bilden zwischen sich vier Zellen jeweils gleichen Volumens. Bei Rotation des Zellenrades 20 gelangt Flüssigdünger aus der Verteilerkammer 3 durch einen Einlauf 21 im Gehäuse 19 in eine dieser Zellen, wird in dieser durch das Zellenrad 20 weiter gefördert und gelangt schließlich durch einen Auslauf 22 aus der Dosierschleuse 5 in den Injektionskörper 7, welcher unterhalb der Dosierschleuse 5 angeordnet ist. Wie weiter unten noch erläutert werden wird, erfolgt der Antrieb des Zellenrades 20 über die Antriebsräder 8.

Wie aus Fig. 3 weiter hervorgeht, weist jedes Paar von Nachlaufrädern 9 eine Schwinge 23 auf, welche größtenteils nur gestrichelt dargestellt ist. Mittels dieser Schwinge 23 ist jedes Paar von Nachlaufrädern 9 an einer horizontalen Achse 24 am Gehäuse 19 heb- und senkbar gelagert. Um ein Herunterfallen der Nachlaufräder 9 bei angehobener Injektionsvorrichtung 1 zu vermeiden, ist zwischen der Verteilerkammer 3 und dem unteren Ende der Schwinge 23 ein Sicherungselement 25 vorgesehen, welches im dargestellten Ausführungsbeispiel durch ein Seil gebildet wird. Es ist jedoch auch denkbar, eine Kette oder andere geeignete Zugmittel vorzusehen.

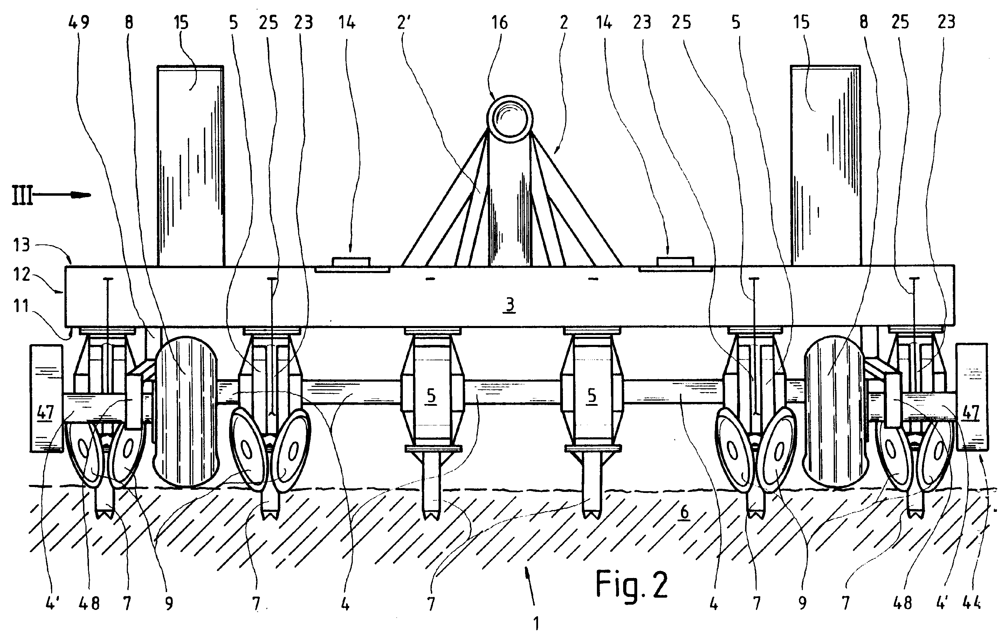

Die hinter jedem Injektionskörper 7 drehbar angebrachten Nachlaufräder sind paarweise und derart verkippt zueinander angeordnet, daß die Schnittgerade beider Radebenen den durch ein Vorschneidrad 17 und den entspechenden Injektionskörper 7 entstandenen Bodenschlitz in einem in Bewegungsrichtung der Injektionsvorrichtung 1 weisenden spitzen Winkel schneidet. In der Draufsicht gemäß Fig. 4 wird erkennbar, daß der Winkel zwischen den Radebenen der im Schnitt dargestellten Nachlaufräder 9 und der Horizontalen in Bewegungsrichtung kleiner ist als 45°, im dargestellten Ausführungsbeispiel beträgt er ca. 18°. Aus Fig. 2 geht hervor, daß auch der Winkel zwischen den Radebenen der Nachlaufräder 9 und der Vertikalen kleiner als 45° ist. Es ist zweckmäßig, daß die vorerwähnten Winkel in einem Bereich zwichen 15 und 30° liegen. Weiter sind die Nachlaufräder 9 gelenkig an der Schwinge 23 angebracht, so daß der Winkel zwischen den beiden Nachlaufrädern 9 eines jeden Paares variabel ist. Die beschriebene Stellung zweier Nachlaufräder 9 zueinander sorgt dafür, daß bei Fortbewegung der Injektionsvorrichtung 1 die Bodenoberfläche von beiden Seiten des Bodenschlitzes zwischen beiden Nachlaufrädern 9 je eines Paares zur Mitte hin bewegt wird und so ein gleichmäßiges und sauberes Schließen des Bodenschlitzes gewährleistet ist. Als Gelenk 26 dient dazu eine Schwenkachse 27, von der zwei Achsstummel 28 ausgehen, auf denen die Nachlaufräder 9 drehbar angeordnet sind. Es versteht sich, daß beim Betrieb der erfindungsgemäßen Injektionsvorrichtung die Stellung der Nachlaufräder 9 bezüglich der Bewegungsrichtung arretiert ist.

Je nach Bodenbeschaffenheit kann es zweckmäßig sein, nicht nur den Winkel zwischen zwei einander zugeordneten Nachlaufrädern 9, sondern auch deren Abstand zueinander zu varieren. Dazu sind auf den Achsstummeln 28 angeordnete Distanzscheiben 29 zur Festlegung des Abstandes zwischen zwei Nachlaufrädern 9 vorgesehen, wie aus Fig. 4 ersichtlich. Durch Versetzen auf die Innen- oder Außenseite der Nabe läßt sich der Abstand der Nachlaufräder 9 zueinander ohne großen Aufwand variieren.

Um ein gleichmäßiges Verschließen jedes Bodenschlitzes zu gewährleisten, kann zur Erzeugung der notwendigen Andruckkraft der Nachlaufräder 9 neben deren Eigengewicht ein Zusatzgewicht und/oder eine Feder vorgesehen sein. Im dargestellten Ausführungsbeispiel sind die Nachlaufräder 9 als Gußräder ausgeführt; es ist jedoch auch denkbar, daß die Nachlaufräder geschweißt ausgeführt sind.

Zur Begrenzung der Schnittiefe der Vorschneidräder 17 weist jedes Vorschneidrad 17 zwei gewölbte Nabendeckel 30 auf, die zentral auf der eigentlichen Schneidscheibe 31 aufliegen.

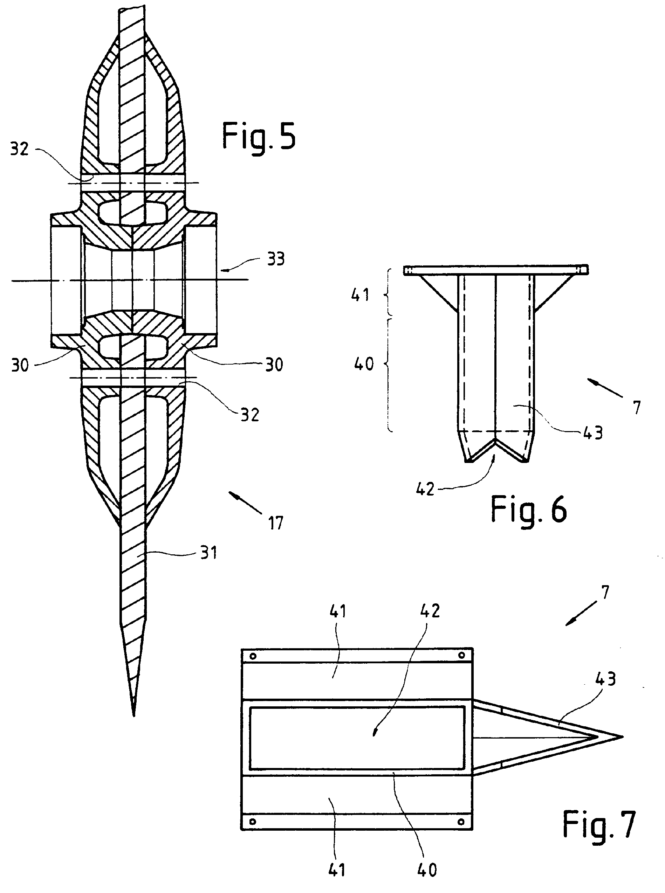

Zur Verbindung der Nabendeckel 30 und der Schneidscheibe 31 sind Bohrungen 32 vorgesehen, wie besonders deutlich aus Fig. 5 hervorgeht, wo ein Vorschneidrad der Injektionsvorrichtung 1 im Schnitt dargestellt ist. Wenn der Winkel zwischen dem äußerem Umfang der Nabendeckel 30 und der flachen Schneidscheibe 31 ca. 30° beträgt (Fig. 5), ist dies zur Erzielung einer "definierten Schnittiefe" des Vorschneidrades 17 ausreichend. Aus Fig. 5 geht ferner hervor, daß die Achsbohrung 33 zur Aufnahme der dort nicht dargestellten Achse 34 durch die beiden, sich in diesem Bereich berührenden Nabendeckel 30 erfolgt.

In Fig. 3 ist erkennbar, daß jedes Vorschneidrad 17 mittels seiner Achse 34 in einer Gabel 35 drehbar angeordnet ist. Diese Gabel 35 ist um eine vertikale Achse 36 durch Anschläge 37 begrenzt drehbar. Wie bereits weiter oben erwähnt, wird jedes Vorschneidrad 17 in den Erdboden 6 hineingedrückt. Dazu ist jedes Vorschneidrad 17 mittels einer in Fig. 3 teilweise gestrichelt dargestellten Feder 39 zum Erdboden 6 hin vorbelastet. Hierdurch wird ein Ausweichen der vorschneidscheibe 17 beim Auftreffen auf Steine od. dgl. um die horizontale Achse 38 ermöglicht.

Schließlich ist in Fig. 3 auch noch der unterhalb der Dosierschleuse 5 angeordnete Injektionskörper 7 dargestellt, welcher in einen Injektionsfuß 40 mündet. Neben dieser Seitenansicht des Injektionskörpers 7 läßt sich dessen Aufbau besonders deutlich den Figuren 6 und 7 entnehmen, die ihn in Vorderansicht sowie in einer Ansicht von unten zeigen. Dabei besteht der Injektionskörper 7 in seinem oberen Bereich aus einem konischen Einlauf 41 und einem im Querschnitt rechteckigen Injektiansfuß 40. Nach unten hin mündet der Injektionsfuß 40 in eine Austragöffnung 42 für den Flüssigdünger. Da die Breite der Austragöffnung und auch des Injektionsfußes 40 die Schnittbreite des Vorschneidrades 17 um ein Mehrfaches übersteigt, ist jeder Injektionsfuß 40 mit einem in Bewegungsrichtung spitz zulaufenden Bug 43 versehen. Dabei ist es besonders zweckmäßig, daß, wie aus den Fig. 3 und 6 hervorgeht, der Bug 43 nach unten hin über die Unterseite des Injektionsfußes 40 um einen gewissen Betrag hervorragt. Auf diese Weise wird erreicht, daß genügend Raum zum Einbringen des Flüssigdüngers vorhanden ist.

Wie weiter oben bereits erwähnt, erfolgt der Antrieb der Zellenräder 20 mittels der Antriebsräder 8. Hierdurch wird ein technisch sehr einfacher Direktantrieb der Dosierschleusen 5 erreicht, der gleichzeitig kostengünstig und robust ist. Dazu sind die Antriebsräder 8 mit der Welle 4 der Dosierschleusen 5 über eine Schwinge 44 verbunden. Ritzel 45 und 45' auf der Welle 4 und auf der Welle 4' jedes Antriebsrades 8 werden mittels einer Kette 46 od. dgl. verbunden. Bei entsprechender Wahl der Ritzel 45 bzw. 45' sowie des Zellenvolumens des Zellenrades 20 kann eine bestimmte Austragsmenge Flüssigdünger pro Flächeneinheit festgelegt werden. Wie besonders deutlich aus Fig. 1 hervorgeht, ist die Schwinge 44 mit einer Verkleidung 47 versehen, welche die Antriebsteile 45, 45' und 46 vor Verschmutzung und Beschädigung schützt. Es ist klar, daß die Antriebsräder 8 neben der Schwinge 44 noch zusätzliche Verbindungselemente zur Injektionsvorrichtung 1 aufweisen müssen, um ihre tragende Funktion erfüllen zu können. Dazu sind, wie in den Fig. 2 und 3 nur angedeutet dargestellt ist, Streben 48 vorgesehen, welche von der Welle 4' ausgehend zwischen zwei Dosierschleusen 5 unter der Verteilerkammer 3 hindurchgeführt sind und dort mittels einer in Fig. 3 angedeuteten Verstelleinrichtung 49 an der Verteilerkammer 3 höhenverstellbar festgelegt sind.

Schließlich ist zwischen den Antriebsrädern 8 und den Dosierschleusen 5 eine Kupplung vorgesehen. Diese Kupplung kann hydraulisch oder mechanisch betätigt sein und dient zum Ausschalten des Drehantriebes der Dosierschleusen 5, auch wenn die Antriebsräder 8 der Injektionsvorrichtung 1 auf dem Boden abrollen und bewegt werden. Hierdurch wird insbesondere vermieden, daß am Ende einer Arbeitsbahn nach dem Anheben der Injektionsvorrichtung 1 durch das sie ziehende Zugfahrzeug noch Flüssigdünger aus den Austragöffnungen der Injektionskörper 7 auslaufen kann.

## Patentansprüche

1. Injektionsvorrichtung zur kontinuierlichen Einbringung von Flüssigdünger in den Boden, mit einem oder mehreren parallel zueinander angeordneten, in den Boden einführbaren und durch diesen parallel zur Bodenoberfläche hindurchbewegbaren, Flüssigdünger führenden und abgebenden Injektionskörpern (7) sowie mit vor den Injektionskörpern (7) drehbar angeordneten Vorschneidrädern (17) und mit die Zuführung und die Dosierung des Flüssigdüngers mittels Dosierschleusen (5) bewirkenden, auf dem Boden abrollenden Antriebsrädern (8), wobei die Injektionsvorrichtung (1) an einen Traktor oder ein Tankfahrzeug anbaubar ist und wobei hinter jedem Injektionskörper (7) Nachlaufräder (9) drehbar angebracht sind, welche paarweise und verkippt zueinander angeordnet sind, derart, daß die aufeinander zu weisenden Stirnflächen der Nachlaufräder (9) in bezug auf die Fortbewegungsrichtung eine nach oben oder nach vorne oder nach oben und vorne weisende Richtungskomponente haben.

2. Injektionsvorrichtung nach Anspruch 1, dadurch gekennzeichnet, daß der Winkel zwischen den Radebenen der Nachlaufräder (9) und der Vertikalen sowie der Horizontalen in Bewegungsrichtung kleiner als 45° ist.

3. Injektionsvorrichtung nach Anspruch 1 oder 2, dadurch gekennzeichnet, daß je ein Paar Nachlaufräder (9) an einer um eine horizontale Achse (24) schwenkbaren Schwinge (23) angeordnet ist.

4. Injektionsvorrichtung nach Anspruch 3, dadurch gekennzeichnet, daß die Nachlaufräder (9) gelenkig an der Schwinge (23) angebracht sind.

5. Injektionsvorrichtung nach Anspruch 4, dadurch gekennzeichnet, daß die Stellung der Nachlaufräder (9) bezüglich der Bewegungsrichtung arretiert ist.

6. Injektionsvorrichtung nach einem der Ansprüche 1 bis 5, dadurch gekennzeichnet, daß die Nachlaufräder (9) auf von der Schwinge (23) ausgehenden Achsstummeln (28) angeordnet sind, wobei auf diesen Achsstummeln (28) angeordnete Distanzscheiben (29) zur Festlegung des Abstandes zwischen zwei Nachlaufräden (9) vorgesehen sind.

7. Injektionsvorrichtung nach einem der Ansprüche 1 bis 6, dadurch gekennzeichnet, daß zur Erzeugung der Andruckkraft der Nachlaufräder neben deren Eigengewicht ein Zusatzgewicht und/oder eine Feder vorgesehen ist.

8. Injektionsvorrichtung nach einem der Ansprüche 1 bis 7, dadurch gekennzeichnet, daß die Nachlaufräder (9) als Gußteile ausgeführt sind.

9. Injektionsvorrichtung nach einem der Ansprüche 1 bis 7, dadurch gekennzeichnet, daß die Nachlaufräder geschweißt ausgeführt sind.

10. Injektionsvorrichtung nach einem der Ansprüche 1 bis 9, dadurch gekennzeichnet, daß jedes Vorschneidrad (17) zwei gewölbte Nabendeckel (30) und eine flache Schneidscheibe (31) aufweist.

11. Injektionsvorrichtung nach Anspruch 10, dadurch gekennzeichnet, daß der am äußeren Umfang der Nabendeckel (30) zwischen diesen und der flachen Schneidscheibe (31) gebildete Winkel zwischen 15 und 30° beträgt.

12. Injektionsvorrichtung nach einem der Ansprüche 1 bis 11, dadurch gekennzeichnet, daß jedes Vorschneidrad (17) um eine vertikale Achse (36) begrenzt drehbar angeordnet ist.

13. Injektionsvorrichtung nach einem der Ansprüche 1 bis 12, dadurch gekennzeichnet, daß jedes Vorschneidrad (17) an einem um eine horizontale Achse (38) verschwenkbaren Schwenkarm (18) angeordnet ist.

14. Injektionsvorrichtung nach Anspruch 13, dadurch gekennzeichnet, daß jedes Vorschneidrad (17) mittels einer Feder (39) zum Erdboden (6) hin vorbelastet ist.

15. Injektionsvorrichtung nach einem der Ansprüche 1 bis 14, dadurch gekennzeichnet, daß jeder Injektionskörper (7) einen im Querschnitt rechteckigen Injektionsfuß (40) aufweist.

16. Injektionsvorrichtung nach Anspruch 15, dadurch gekennzeichnet, daß jeder Injektionsfuß (40) einen in Bewegungsrichtung spitz zulaufenden und nach unten hin über seine Unterseite vorragenden Bug (43) aufweist.

17. Injektionsvorrichtung nach einem der Ansprüche 1 bis 16, dadurch gekennzeichnet, daß die Antriebsräder (8) nachlaufend an Schwingen (44) angeordnet sind.

18. Injektionsvorrichtung nach einem der Ansprüche 1 bis 16, dadurch gekennzeichnet, daß die Antriebsräder seitlich der Injektionsvorrichtung auf der die Dosierschleusen antreibenden Welle angeordnet sind.

19. Injektionsvorrichtung nach einem der Ansprüche 1 bis 18, dadurch gekennzeichnet, daß zwischen den Antriebsrädern und den Dosierschleusen eine Kupplung vorgesehen ist.

20. Injektionsvorrichtung nach Anspruch 19, dadurch gekennzeichnet, daß die Kupplung hydraulisch oder mechanisch betätigbar ausgeführt ist.

## Claims

1. An injection device for continuously feeding liquid manure into the ground comprising one or more injection bodies (7) arranged in parallel with each other, insertable into the ground and movable through the ground in parallel with the ground surface and carrying and supplying liquid manure; pre-cutting wheels (17) rotatably arranged in front of the injection bodies (7); drive wheels (8) rolling on the ground accomplishing the supply and dosage of the liquid manure by means of metering sluices (5); wherein the injection device (1) is mountable to a tractor or a tank truck and wherein trailing wheels (9) are rotatably arranged behind each injection body (7) with the trailing wheels arranged paired and tilted towards each other such, that the front faces of the trailing wheels (9) facing each other comprise an upward or forward or upward and forward direction component in relation to the moving direction.

2. Injection device according to claim 1, characterized in that the angle between the wheel plane of the trailing wheels (9) and the vertical line and the horizontal line in moving direction is smaller than 45°.

3. Injection device according to claim 1 or 2, characterized in that a pair of trailing wheels (9) is arranged at a rocker (23), respectively, with the rocker pivotable about a horizontal axis (24).

4. Injection device according to claim 3, characterized in that the trailing wheels (9) are articulatedly arranged at the rocker (23).

5. Injection device according to claim 4, characterized in that the position of the trailing wheels (9) is locked in relation to the moving direction.

6. Injection device according to one of the claims 1 to 5, characterized in that the trailing wheels (9) are arranged at axle stubs (28) extending from the rokker (23) wherein spacer disks (29) arranged at the axle stubs (28) are provided for defining the distance between two trailing wheels (9).

7. Injection device according to one of the claims 1 to 6, characterized in that for generating the contact pressure of the trailing wheels beside the weight thereof an additional wheight and/or a spring is provided.

8. Injection device according to one of the claims 1 to 7, characterized in that the trailing wheels (9) are designed as castings.

9. Injection device according to one of the claims 1 to 7, characterized in that the trailing wheels are welded.

10. Injection device according to one of the claims 1 to 9, characterized in that each pre-cutting wheel (17) comprises two curved hub lids (30) and a flat cutting disk (31).

11. Injection device according to claim 10, characterized in that the angle at the outer circumference of the hub lid (30) formed between the hub lid and the flat cutting disk (31) is between 15° and 30°.

12. Injection device according to one of the claims 1 to 11, characterized in that each pre-cutting wheel (17) is arranged limitedly rotable about a vertical axis (36).

13. Injection device according to one of the claims 1 to 12, characterized in that each pre-cutting wheel (17) is arranged at a swivel arm (18) pivotable about a horizontal axis (38).

14. Injection device according to claim 13, characterized in that each pre-cutting wheel (17) is biased towards the ground (6) by means of a spring (39).

15. Injection device according to one of the claims 1 to 14, characterized in that each injection body (7) comprises an injection base (40) rectangular in cross-section.

16. Injection device according to claim 15, characterized in that each injection base (40) comprises a bow (43) formed acute in moving direction and protruding downwards beyond the under side thereof.

17. Injection device according to one of the claims 1 to 16, characterized in that the drive wheels (8) are arranged trailing at rockers (44).

18. Injection device according to one of the claims 1 to 16, characterized in that the drive wheels are arranged laterally of the injection device at the shaft driving the metering sluices.

19. Injection device according to one of the claims 1 to 18, characterized in that a clutch is provided between the drive wheels and the metering sluices.

20. Injection device according to claim 19, characterized in that the clutch is operable mechanically or hydraulically.

## Revendications

1. Dispositif d'injection pour l'apport en continu d'engrais liquide dans le sol, muni d'un ou de plusieurs corps d'injection (7) d'amenée et d'apport d'engrais liquide, disposés parallèlement les uns aux autres, susceptibles d'être insérés dans le sol et de s'y déplacer parallèlement à la surface du sol, ainsi que des roues de pré-découpe (17) montées à rotation devant les corps d'injection (7) et mettant en oeuvre l'amenée et le dosage de l'engrais liquide à l'aide d'écluses de dosage (5), de roues d'entraînement (8) roulant sur le sol, dans lequel le dispositif d'injection (1) est susceptible d'être associé à un tracteur ou à un véhicule muni d'un réservoir et dans lequel, derrière chaque corps d'injection (7), sont disposées des roues de recouvrement (9) rotatives, qui sont disposées par paires et sont désaxées l'une par rapport à l'autre, de telle façon que les surfaces frontales dirigées l'une vers l'autre des roues de recouvrement (9), par rapport à la direction d'avancement, présentent une composante dirigée vers le haut ou vers l'avant, ou vers le haut et vers l'avant.

2. Dispositif d'injection selon la revendication 1, caractérisé en ce que l'angle entre les plans des roues de recouvrement (9) et des verticales ainsi que des horizontales dans la direction de déplacement est inférieur à 45 degrés.

3. Dispositif d'injection selon la revendication 1 ou 2, caractérisé en ce que chacune des paires de roues de recouvrement (9) est disposée sur un bras oscillant (23) susceptibles de pivoter autour d'un axe horizontal (24).

4. Dispositif d'injection selon la revendication 3, caractérisé en ce que les roues de recouvrement (9) sont disposées articulées sur le bras pivotant (23).

5. Dispositif d'injection selon la revendication 4, caractérisé en ce que la position des roues de recouvrement (9) est fixée par rapport à la direction de déplacement.

6. Dispositif d'injection selon l'une des revendications 1 à 5, caractérisé en ce que les roues de recouvrement (9) sont disposées sur des tronçons d'axes (28) partant des bras oscillants (23), des disques d'entretoisement (29) étant prévus montés sur ces tronçons d'axe (28) pour fixer la distance entre deux roues de recouvrement (9).

7. Dispositif d'injection selon l'une des revendications 1 à 6, caractérisé en ce que pour créer la force de pression ou d'appui des roues de recouvrement, on prévoit en plus de leur poids propre, un poids et/ou un ressort supplémentaires.

8. Dispositif d'injection selon l'une des revendications 1 à 7, caractérisé en ce que les roues de recouvrement (9) sont réalisées sous la forme de pièces coulées.

9. Dispositif d'injection selon l'une des revendications 1 à 7, caractérisé en ce que les roues de recouvrement sont réalisées sous la forme de pièces soudées.

10. Dispositif d'injection selon l'une des revendications 1 à 9, caractérisé en ce que chaque roue de pré-découpe (17) comporte deux couvercles de moyeux bombés (30) et un disque tranchant plat (31).

11. Dispositif d'injection selon la revendication 10, caractérisé en ce que, à la périphérie extérieure du couvercle de moyeu (30), l'angle formé entre ce couvercle et le disque tranchant plat (31), est compris entre 15 et 30 degrés.

12. Dispositif d'injection selon l'une des revendications 1 à 11, caractérisé en ce que chaque roue de pré-découpe (17) est montée à rotation limitée autour d'un axe vertical (36).

13. Dispositif d'injection selon l'une des revendications 1 à 12, caractérisé en ce que chaque roue de pré-découpe (17) est disposée sur un bras pivotant (18) susceptible de pivoter autour d'un axe horizontal (38).

14. Dispositif d'injection selon la revendication 13, caractérisé en ce que chaque roue de pré-découpe (17) est susceptible d'être sollicitée ou préchargée vers le sol (6) par un ressort (39).

15. Dispositif d'injection selon l'une des revendications 1 à 14, caractérisé en ce que chaque corps d'injection (7) comporte un pied d'injection (40) de section rectangulaire.

16. Dispositif d'injection selon la revendication 15, caractérisé en ce que chaque pied d'injection (40) comporte un soc (43) à profil en pointe vers l'avant dans la direction de déplacement et faisant saillie vers le bas par sa face inférieure.

17. Dispositif d'injection selon l'une des revendications 1 à 16, caractérisé en ce que les roues d'entraînement 8 sont disposées à l'aval des bras pivotants (44).

18. Dispositif d'injection selon l'une des revendications 1 à 16, caractérisé en ce que les roues d'entraînement sont disposées latéralement par rapport au dispositif d'injection sur l'arbre d'entraînement des écluses de dosage.

19. Dispositif d'injection selon l'une des revendications 1 à 18, caractérisé en ce qu'un accouplement est prévu entre les roues d'entraînement et les écluses de dosage.

20. Dispositif d'injection selon la revendication 19, caractérisé en ce que l'accouplement est actionné par voie hydraulique ou mécanique.
